# EUROPÄISCHE PATENTSCHRIFT

(11) **EP 4 078 104 B1**
(45) Veröffentlichungstag und Bekanntmachung des Hinweises auf die Patenterteilung: **28.05.2025**
(21) Anmeldenummer: 20811315.9
(22) Anmeldetag: 20.11.2020
(51) Int. Cl.: G01K 1/024, G01K 1/143, G01K 13/02, G01F 1/84

(54) **MESSAUFNEHMER UND CORIOLIS-MESSGERÄT**
SENSOR, AND CORIOLIS METER
CAPTEUR ET DÉBITMÈTRE DE CORIOLIS

(30) Priorität: 16.12.2019 DE 102019134600
(43) Veröffentlichungstag der Anmeldung: 26.10.2022
(73) Patentinhaber: Endress+Hauser Flowtec AG, 4153 Reinach (CH)
(72) Erfinder: ANKLIN, Martin Josef, 4143 Dornach (CH); HUBER, Reinhard, 79713 Bad Säckingen (DE); SCHWENTER, Benjamin, 4226 Breitenbach (CH); SCHWAB, Sandro, 4665 Oftringen (CH)
(74) Vertreter: Endress + Hauser Group Services (Deutschland) AG+Co. KG
(86) Internationale Anmeldenummer: PCT/EP2020/082930
(87) Internationale Veröffentlichungsnummer: WO 2021/121870

(56) Entgegenhaltungen:
- CN-U- 206 019 856
- DE-A1- 102018 102 379
- US-B2- 10 209 112
- US-B2- 9 435 695
- SCHUMACHER B: "DOSIEREN, AFUELLEN UND MISCHEN MIT CORIOLIS-MASSEDURCHFLUSSMESSGERAETEN", WDM : WAGEN DOSIEREN + MISCHEN, VERLAG COATING THOMAS & CO., ST. GALLEN, CH, vol. 37, no. 2, 1 March 2006 (2006-03-01), pages 28 - 32, XP001241297, ISSN: 1435-2176

## Beschreibung

Die Erfindung betrifft einen Messaufnehmer eines Coriolis-Messgeräts und ein solches Coriolis-Messgerät.

Coriolis-Messgeräte sind dazu eingerichtet, einen Massedurchfluss und eine Dichte eines durch eine Rohrleitung strömenden Mediums zu bestimmen. Das Medium wird dabei durch mindestens ein Messrohr des Coriolis-Messgerät geleitet, welches mittels eines Erregers zu Schwingungen angeregt wird. Sensoren lesen diese Schwingungen aus, und beispielsweise anhand von Erregerleistung und Schwingungsamplitude sowie einer Phasenverschiebung zwischen Erregung und Messrohrschwingung können oben aufgeführte Größen bestimmt werden.

Die Messrohrschwingungen sind jedoch nicht nur vom Medium und der Erregung abhängig, sondern auch von einer Messrohrtemperatur, welche beispielsweise ein Flächenträgheitsmoment des Messrohrs und somit Messrohrschwingungen beeinflusst. Im Stand der Technik werden daher Temperatursensoren eingesetzt, um den Einfluss der Messrohrtemperatur auf Messrohrschwingungen einbeziehen zu können. Ein Coriolis-Messgerät aufweisend einen Temperatursensor ist in der US 10 209 112 B2 offenbart.

Jedoch hat die Verwendung von Temperatursensoren einen erhöhten Verkabelungsaufwand zur Folge, was die Wahrscheinlichkeit eines teilweisen Ausfalls des Coriolis-Messgeräts durch Kabelbruch erhöht und Fertigung sowie Montage umständlicher gestaltet.

Aufgabe der Erfindung ist es, einen Messaufnehmer mit Temperatursensor sowie ein Coriolis-Messgerät mit einem solchen Messaufnehmer bereitzustellen, bei welchem eine Ausfallswahrscheinlichkeit verringert sowie Montage und Fertigung weniger umständlich verläuft.

Die Aufgabe wird gelöst durch einen Messaufnehmer gemäß dem unabhängigen Anspruch 1 sowie durch ein Coriolis-Messgerät gemäß dem unabhängigen Anspruch 10.

Ein erfindungsgemäßer Messaufnehmer eines Coriolis-Messgeräts zur Messung des Massedurchflusses oder der Dichte eines durch eine Rohrleitung strömenden Mediums umfasst:
zumindest ein Messrohr zum Führen des Mediums mit jeweils einem Einlauf und einem Auslauf;
zumindest einen Erreger zum Erregen von Messrohrschwingungen;
zumindest zwei Sensoren zum Erfassen von Messrohrschwingungen;
einen Trägerkörper zum Halten des Messrohrs;
wobei der Messaufnehmer einen RFID-Temperatursensor aufweist, welcher dazu eingerichtet ist, eine Temperatur des Messrohrs zu bestimmen,
wobei der Messaufnehmer einen RF-Transceiver aufweist, welcher dazu eingerichtet ist, den Temperatursensor auszulesen.

Der RFID-Temperatursensor ist dabei ein passiver Sensor und bezieht seine Energie aus einem durch den RF-Transceiver erzeugten Radiofrequenz-Signal.

In einer Ausgestaltung ist der Temperatursensor auf dem Messrohr angebracht.

Auf diese Weise kann die Temperatur präzise gemessen werden, mit dem Nachteil, dass Messrohrschwingungen geringfügig beeinflusst werden.

In einer Ausgestaltung weist das mindestens eine Messrohr auf einer Einlaufseite des Messrohrs sowie auf einer Auslaufseite des Messrohrs jeweils mindestens eine Fixierplatte auf, wobei die mindestens eine Fixierplatte einer jeweiligen Seite dazu eingerichtet ist, das Messrohr zu fixieren und einen Schwingungsknoten zu definieren,
wobei der Temperatursensor auf dem Messrohr oder einer Fixierplatte angebracht ist.

Ein Anbringen des Temperatursensors auf der Fixierplatte vermindert eine Präzision der Temperaturmessung geringfügig, lässt aber ein freies Schwingen des Messrohrs zu.

In einer Ausgestaltung ist der Transceiver dazu eingerichtet, den Temperatursensor kontinuierlich oder in Zeitabständen kleiner als 10 Sekunden auszulesen.

Auf diese Weise lässt sich der Massedurchfluss bzw. die Dichte des Mediums mit ausreichender Zeitauflösung verfolgen.

In einer Ausgestaltung ist das mindestens eine Messrohr mit dem Temperatursensor austauschbar,
wobei der Messaufnehmer eine Kupplung zum Einkoppeln und Auskoppeln für mindestens ein Messrohr aufweist.

Insbesondere bei einem Messaufnehmer mit austauschbarem Messrohr ist eine vereinfachte Handhabung bei der Montage von großem Vorteil. Insbesondere in technischen Bereichen mit erhöhten Hygieneanforderungen müssen Messrohre von Messaufnehmern beispielsweise bei Medienwechsel ausgetauscht werden, um eine Kontamination der Medien untereinander zu vermeiden. Beispielsweise bei einer Abfüllung von verschiedenen Wirkstoffen von Medikamenten ist es unbedingt erforderlich, dass diese Wirkstoffe räumlich getrennt bleiben. Messaufnehmer mit mittels Kupplung austauschbarem Messrohr werden auch als "Disposable" bezeichnet, da im Gegensatz zu normalen Messaufnehmern das mindestens eine Messrohr mittels der Kupplung stark vereinfacht und vergleichsweise schnell ausgetauscht werden kann. Die Kupplung kann dabei beispielsweise einen Rastmechanismus aufweisen.

In einer Ausgestaltung ist der Temperatursensor ohne Beeinträchtigung seiner Funktionalität durch Gammastrahlung sterilisierbar. Bei "Disposable"-Messaunehmern findet vor Benutzung der Messrohre eine Sterilisation der Messrohre durch Gammastrahlung statt. Idealerweise wird der Temperatursensor mit dem Messrohr sterilisiert, um eine Kontamination des Messrohrs durch nachträgliches Aufbringen des Temperatursensors zu vermeiden.

Solche gammasterilisierbaren Temperatursensoren werden unter anderem von der Firma Verigenics unter der Bezeichnung GammaTag verkauft.

In einer Ausgestaltung ist der Temperatursensor dazu eingerichtet, weitere Informationen wie beispielsweise Gerätedaten wie Nennweite des Messrohrs, Kalibrierfaktor des Messrohrs, Nullpunkt des Coriolis-Messsystems, Gerätenummer und/oder Dichtekoeffizienten des Messrohrs zu übermitteln. Der Nullpunkt entspricht dabei einer Schwingungsfrequenz beispielsweise bei Null-Durchfluss oder ohne Medium. Dichtekoeffizienten werden für die Berechnung einer Mediendichte aus anderen Größen wie beispielsweise Schwingungsfrequenz und/oder Temperatur des Messrohrs benötigt.

In einer Ausgestaltung sind der Transceiver und der Temperatursensor zumindest teilweise von einer Abschirmung umgeben, welche Abschirmung dazu eingerichtet ist, eine Belastung des Erregers und der Sensoren durch elektromagnetische Strahlung emittiert durch den Transceiver zu reduzieren.

In einer Ausgestaltung ist der Transceiver thermisch vom Messrohr entkoppelt.

Auf diese Weise lässt sich beispielsweise eine Asymmetrie zwischen Einlauf und Auslauf im Hinblick auf Schwingungseigenschaften durch ungleiche Temperaturverteilung vermeiden.

Ein erfindungsgemäßes Coriolis-Messgerät umfasst einen erfindungsgemäßen Messaufnehmer und eine elektronische Mess-/Betriebsschaltung zum Betreiben des Messaufnehmers und zum Bereitstellen und Ausgeben von Durchfluss- oder Dichtemesswerten.

Im Folgenden wird die Erfindung anhand von Ausführungsbeispielen beschrieben.
Fig. 1 skizziert ein beispielhaftes erfindungsgemäßes Coriolis-Durchflussmessgerät;
und Fig. 2 skizziert eine Seitenansicht eines beispielhaften erfindungsgemäßen Messaufnehmers;
und Fig. 3 skizziert einen beispielhaften erfindungsgemäßen RFID-Temperatursensor.

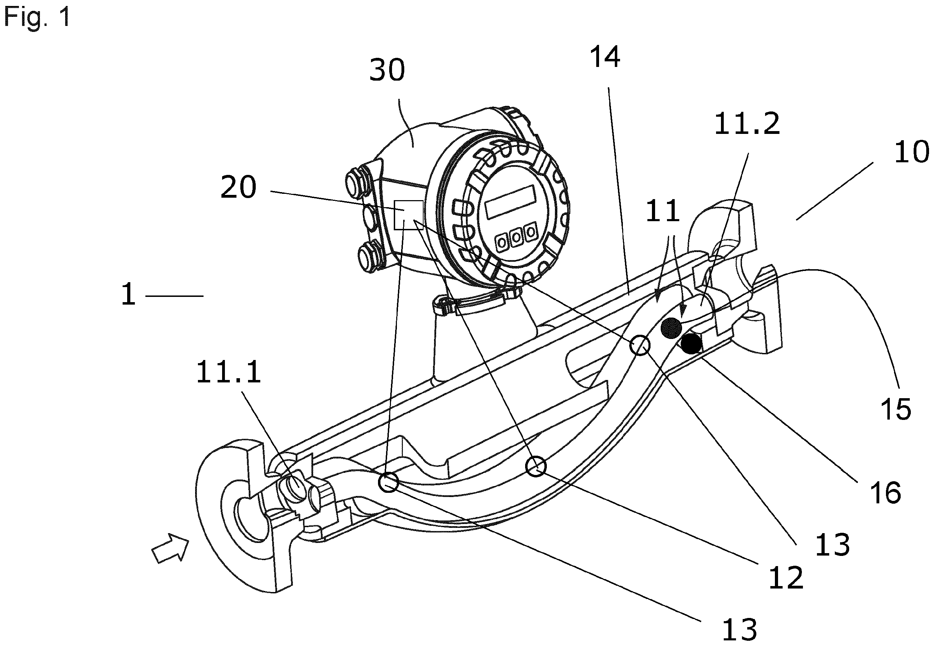

Fig. 1 zeigt ein Coriolis-Messgerät 1 mit einem Messaufnehmer 10, einer elektronischen Mess-/Betriebsschaltung 20 und einem Gehäuse 30 zum Behausen der elektronischen Mess-/Betriebsschaltung.

Der Messaufnehmer weist zwei Messrohre 11 mit jeweils einem Einlauf 11.1 und einem Auslauf 11.2 auf, welche von einem Trägerkörper 14 gehalten werden. Die Messrohre sind dabei dazu eingerichtet, gegeneinander zu schwingen. Die hier gezeigte Messrohranzahl ist beispielhaft, der Messaufnehmer kann beispielsweise auch nur ein Messrohr oder vier Messrohre aufweisen, welche insbesondere in zwei Messrohrpaaren angeordnet sind, wobei die Messrohre eines Paars dazu eingerichtet sind, gegeneinander zu schwingen. Der Messaufnehmer weist einen Erreger 12 auf, welcher dazu eingerichtet ist, die Messrohre zum Schwingen anzuregen. Der Messaufnehmer weist zwei Sensoren 13 auf, welche dazu eingerichtet sind, die Messrohrschwingungen zu erfassen. Ein durch die Messrohre strömendes Medium beeinflusst die Messrohrschwingungen in charakteristischer Art und Weise, so dass aus den Messsignalen der Sensoren ein Massedurchfluss und/oder eine Dichte des Mediums und/oder eine Viskosität des Mediums herleitbar ist. Die Schwingungseigenschaften des Messrohrs werden auch durch eine Messrohrtemperatur beeinflusst, so dass ein Temperatursensor 15 vorgesehen ist, um die Messrohrtemperatur zu erfassen. Um eine weitere Verkabelung zu vermeiden, ist der Temperatursensor erfindungsgemäß als RFID-Temperatursensor 15 ausgestaltet, welcher wie hier angedeutet an einem Messrohr angebracht sein kann. Ein RFID-Transceiver 16 ist dazu eingerichtet, den Temperatursensor 15 auszulesen. Das Auslesen findet dabei bevorzugt quasikontinuierlich oder in Zeitabständen von weniger als 10 Sekunden statt.

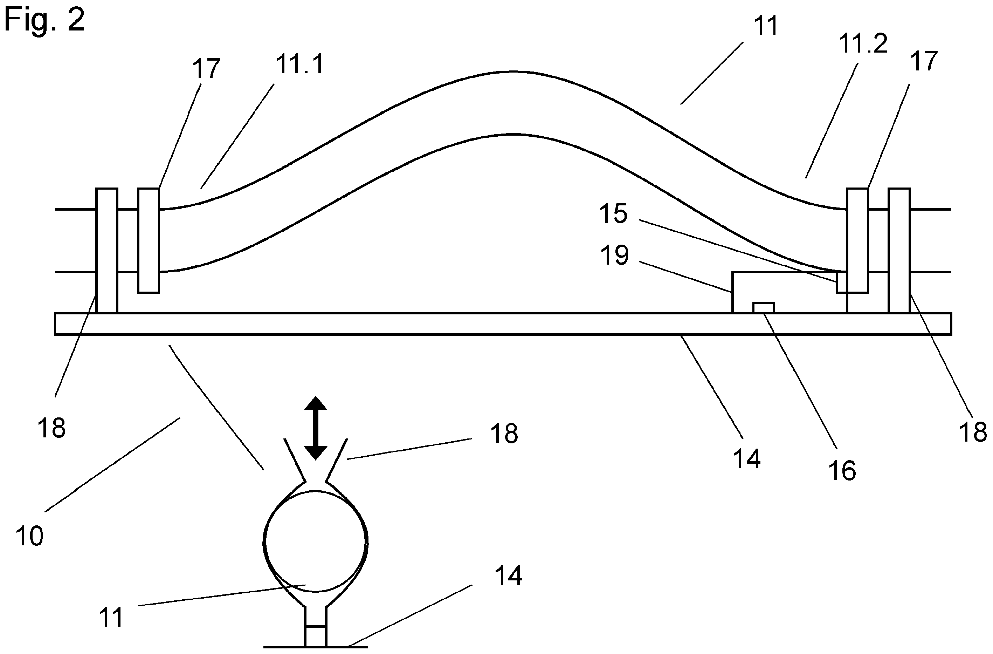

Fig. 2 zeigt eine schematische Seitenansicht auf einen beispielhaften erfindungsgemäßen Messaufnehmer 10 mit einem Messrohr 11, welches Messrohr auf von einem Trägerkörper 14 gehalten wird. Die mechanische Verbindung kann wie hier dargestellt eine ohne großen Aufwand lösbare Verbindung sein, die mittels einer Kupplung 18 hergestellt ist. In technischen Bereichen mit erhöhten Hygieneanforderungen müssen Messrohre von Messaufnehmern beispielsweise bei Medienwechsel ausgetauscht werden, um eine Kontamination der Medien untereinander zu vermeiden. Beispielsweise bei einer Abfüllung von verschiedenen Wirkstoffen von Medikamenten ist es unbedingt erforderlich, dass diese Wirkstoffe räumlich getrennt bleiben. Messaufnehmer mit mittels Kupplung austauschbarem Messrohr werden auch als "Disposable" bezeichnet, da im Gegensatz zu normalen Messaufnehmern das mindestens eine Messrohr mittels der Kupplung stark vereinfacht und vergleichsweise schnell ausgetauscht werden kann. Die Kupplung kann dabei beispielsweise einen Rastmechanismus mit zwei Armen aufweisen, wie in der skizzierten Frontansicht angedeutet. Durch Ziehen bzw. Drücken des Messrohrs entlang der mit dem Doppelpfeil angedeuteten Richtung kann das Messrohr in die Kupplung einrasten bzw. aus der Kupplung herausgezogen werden. Die Arme weisen dabei eine geometrische Form auf, welche bei Drücken des Messrohrs in eine

Sollposition und bei Herausnehmen des Messrohrs zu einer Öffnungsbewegung der Arme führt. Die hier dargestellte Kupplung ist rein beispielhaft und nicht einschränkend auszulegen. Das mindestens eine Messrohr kann wie hier dargestellt am Einlauf 11.1 sowie am Auslauf 11.2 jeweils mindestens eine Fixierplatte 17 aufweisen, welche dazu eingerichtet sind, Schwingungsknoten der Messrohrschwingungen zu definieren. Der Temperatursensor 15 kann anders als in Fig. 1 angedeutet wie hier dargestellt auch an einer Fixierplatte befestigt sein. Auf diese Weise wird eine Beeinflussung von Messrohrschwingungen vermieden. Da die Fixierplatten in gutem thermischem Kontakt zum Messrohr stehen, ist eine Messrohrtemperaturbestimmung nur geringfügig beeinträchtigt. Der Transceiver 16 kann wie hier dargestellt auf dem Trägerkörper in räumlicher Nähe zum Temperatursensor angeordnet sein. Unter anderem auf diese Weise kann eine thermische Entkopplung des Transceivers vom Messrohr eingerichtet werden. Die räumliche Nähe ermöglicht ein Auslesen des RFID-Temperatursensors mit geringer Strahlungsleistung. So wird eine Störung elektromagnetisch sensibler Gegenstände wie beispielsweise Sensoren oder Erreger vermindert. Zwecks weiterer Verminderung dieser Störungen kann wie hier dargestellt eine Abschirmung 19 eingerichtet sein, welche ein Raumvolumen definiert, in welchem sich die RFID-Strahlung bevorzugt ausbreiten kann. Je nach Ausgestaltung von Sensoren und Erreger sowie Temperatursensor und Transceiver kann eine Abschirmung jedoch auch unnötig sein. Dies ist insbesondere der Fall, wenn eine ausreichende Trennung von elektronischen Betriebsfrequenzen vorliegt.

In einer Ausgestaltung ist der Temperatursensor ohne Beeinträchtigung seiner Funktionalität durch Gammastrahlung sterilisierbar. Bei "Disposable"-Messaunehmern findet vor Benutzung der Messrohre eine Sterilisation der Messrohre durch Gammastrahlung statt. Idealerweise wird der Temperatursensor zusammen mit dem Messrohr sterilisiert, um eine Kontamination des Messrohrs durch nachträgliches Aufbringen des Temperatursensors zu vermeiden.

In einer Ausgestaltung ist der Temperatursensor dazu eingerichtet, weitere Informationen wie beispielsweise Gerätedaten wie Nennweite, Kalibrierfaktor, Nullpunkt, Gerätenummer und/oder Dichtekoeffizienten zu übermitteln. Dadurch können nach Einsetzen eines neuen Messrohrs bzw. neuer Messrohre in einen Messaufnehmer für einen korrekten Betrieb des Coriolis-Messgeräts benötigte Daten abgerufen werden.

Die hier gezeigte Messrohranzahl ist beispielhaft, der Messaufnehmer kann beispielsweise auch zwei Messrohre oder vier Messrohre aufweisen, welche insbesondere in Messrohrpaaren angeordnet sind, wobei die Messrohre eines Paars dazu eingerichtet sind, gegeneinander zu schwingen.

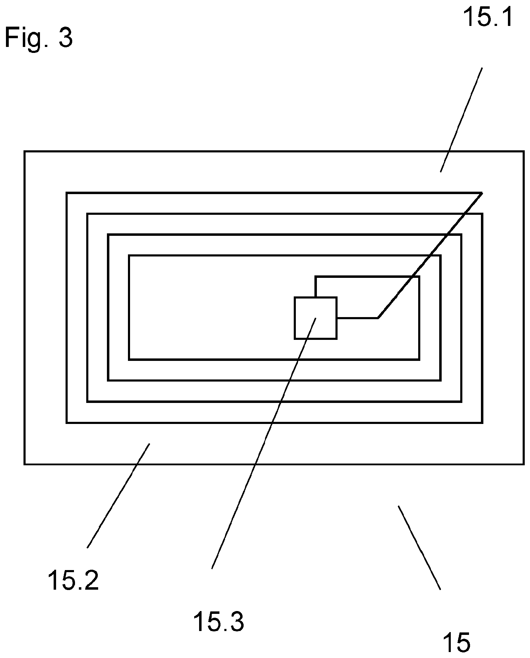

Fig. 3 skizziert den Aufbau eines beispielhaften RFID-Temperatursensors umfassend einen Mikrochip 15.3, eine Spule 15.2 und ein Sensorsubstrat 15.1, auf welchem Sensorsubstrat 15.1 Spule und Mikrochip aufgebracht sind. Die Spule ist dazu eingerichtet, vom RF-Transceiver erzeugte Radiofrequenz-Signal zu erfassen und in eine elektrische Spannung zu wandeln, sowie als Antwort auf solche Radiofrequenz-Signale Radiofrequenz-Antwortsignale auszugeben. Der Mikrochip wird dabei durch die mittels der Spule erzeugte elektrische Spannung betrieben, ist also ein passives Bauteil. Der Mikrochip weist dazu zwei Kontakte auf, mittels welchen er mit jeweils einem Ende der Spule elektrisch verbunden ist. Eine Verbindung mit einem entfernten Spulenende verläuft dabei über Windungen der Spule hinweg, und ist von diesen Windungen elektrisch isoliert. Der Mikrochip weist dabei eine Temperaturmessfunktion auf. Der Mikrochip kann auch dazu eingerichtet sein, weitere Informationen wie beispielsweise Gerätedaten wie Nennweite, Kalibrierfaktor, Nullpunkt, Gerätenummer und/oder Dichtekoeffizienten auszugeben. Das Substrat und die Spule können dabei flexibel ausgestaltet sein, so dass der Temperatursensor auch auf gekrümmten Oberflächen aufgebracht werden kann. Ein solcher Mikrochip wird beispielsweise von Fujitsu hergestellt und unter der Bezeichnung Fujitsu MB89R118 vertrieben.

### Bezugszeichenliste

- 1: Coriolis-Messgerät
- 10: Messaufnehmer
- 11: Messrohr
- 11.1: Einlauf
- 11.2: Auslauf
- 12: Erreger
- 13: Sensor
- 14: Trägerkörper
- 15: RFID-Temperatursensor
- 15.1: Sensorsubstrat
- 15.2: Spule
- 15.3: Mikrochip
- 16: RF-Transceiver
- 17: Fixierplatte
- 18: Kupplung
- 19: Abschirmung
- 20: elektronische Mess-/Betriebsschaltung
- 30: Gehäuse

## Patentansprüche

1. Messaufnehmer (10) eines Coriolis-Messgeräts (1) zur Messung des Massedurchflusses oder der Dichte eines durch eine Rohrleitung strömenden Mediums umfassend:
zumindest ein Messrohr (11) zum Führen des Mediums mit jeweils einem Einlauf (11.1) und einem Auslauf (11.2);
zumindest einen Erreger (12) zum Erregen von Messrohrschwingungen;
zumindest zwei Sensoren (13) zum Erfassen von Messrohrschwingungen;
einen Trägerkörper (14) zum Halten des Messrohrs;
**dadurch gekennzeichnet, dass** der Messaufnehmer einen RFID-Temperatursensor (15) aufweist, welcher dazu eingerichtet ist, eine Temperatur des Messrohrs zu bestimmen,
wobei der Messaufnehmer einen RF-Transceiver (16) aufweist, welcher dazu eingerichtet ist, den Temperatursensor auszulesen,
wobei das mindestens eine Messrohr (11) sowie der Temperatursensor austauschbar ist,
wobei der Messaufnehmer (10) eine Kupplung (18) zum Einkoppeln und Auskoppeln für mindestens ein Messrohr aufweist,
wobei der Temperatursensor (15) ohne Beeinträchtigung seiner Funktionalität durch Gammastrahlung sterilisierbar ist,
wobei der Temperatursensor und das Messrohr dazu eingerichtet sind, gemeinsam durch Gammastrahlung sterilisiert zu werden.

2. Messaufnehmer nach Anspruch 1,
wobei der Temperatursensor auf dem Messrohr angebracht ist.

3. Messaufnehmer nach Anspruch 1,
wobei das mindestens eine Messrohr auf einer Einlaufseite des Messrohrs sowie auf einer Auslaufseite des Messrohrs jeweils mindestens eine Fixierplatte (17) aufweist, wobei die mindestens eine Fixierplatte einer jeweiligen Seite dazu eingerichtet ist, das Messrohr zu fixieren und einen Schwingungsknoten zu definieren,
wobei der Temperatursensor auf dem Messrohr oder einer Fixierplatte angebracht ist.

4. Messaufnehmer nach einem der vorigen Ansprüche,
wobei der Transceiver (16) dazu eingerichtet ist, den Temperatursensor kontinuierlich oder in Zeitabständen kleiner als 10 Sekunden auszulesen.

5. Messaufnehmer nach einem der vorigen Ansprüche,
wobei der Temperatursensor (15) dazu eingerichtet ist, weitere Informationen wie beispielsweise Gerätedaten wie Nennweite, Kalibrierfaktor, Nullpunkt, Gerätenummer, Dichtekoeffizienten zu übermitteln.

6. Messaufnehmer nach einem der vorigen Ansprüche,
wobei der Transceiver (16) und der Temperatursensor (15) zumindest teilweise von einer Abschirmung (19) umgeben sind, welche Abschirmung dazu eingerichtet ist, eine Belastung des Erregers und der Sensoren durch elektromagnetische Strahlung emittiert durch den Transceiver zu reduzieren.

7. Messaufnehmer nach einem der vorigen Ansprüche,
wobei der Transceiver thermisch vom Messrohr entkoppelt ist.

8. Coriolis-Messgerät (1) umfassend
einen Messaufnehmer (10) nach einem der vorigen Ansprüche,
eine elektronische Mess-/Betriebsschaltung (20) zum Betreiben des Messaufnehmers und zum Bereitstellen und Ausgeben von Durchfluss- oder Dichtemesswerten,
ein Gehäuse (30) zum Behausen der elektronischen Mess-/Betriebsschaltung.

## Claims

1. A sensor (10) of a Coriolis measuring device (1) for measuring the mass flow or the density of a medium flowing through a pipe, comprising:
at least one measuring tube (11) for conducting the medium, each having an inlet (11.1) and an outlet (11.2);
at least one exciter (12) for exciting measuring tube vibrations;
at least two sensors (13) for detecting measuring tube vibrations;
a carrier body (14) for holding the measuring tube;
**characterized in that** the measuring sensor has an RFID temperature sensor (15) which is adapted to determine a temperature of the measuring tube,
wherein the sensor comprises an RF transceiver (16) adapted to read the temperature sensor,
wherein the at least one measuring tube (11) and the temperature sensor are interchangeable,
wherein the sensor (10) comprises a coupling (18) for coupling and decoupling at least one measuring tube,
wherein the temperature sensor (15) can be sterilized by gamma radiation without impairment of its functionality,
wherein the temperature sensor and the measuring tube are designed to be sterilized together by gamma radiation.

2. Measuring sensor according to claim 1,
wherein the temperature sensor is mounted on the measuring tube.

3. Measuring sensor according to claim 1,
wherein the at least one measuring tube has at least one fixation plate (17) on an inlet side of the measuring tube and on an outlet side of the measuring tube, wherein the at least one fixation plate of a respective side is adapted to fix the measuring tube and to define a vibration node,
wherein the temperature sensor is attached to the measuring tube or to a fixation plate.

4. A sensor according to one of the previous claims,
wherein the transceiver (16) is adapted to read the temperature sensor continuously or at time intervals of less than 10 seconds.

5. A sensor according to one of the previous claims,
wherein the temperature sensor (15) is adapted to transmit further information such as device data such as nominal width, calibration factor, zero point, device number, density coefficients.

6. Measuring sensor according to one of the previous claims,
wherein the transceiver (16) and the temperature sensor (15) are at least partially surrounded by a shield (19), which shield is adapted to reduce exposure of the exciter and the sensors to electromagnetic radiation emitted by the transceiver.

7. A sensor according to any of the preceding claims,
wherein the transceiver is thermally decoupled from the meter tube.

8. A Coriolis meter (1) comprising
a sensor (10) according to any of the preceding claims,
an electronic measuring/operating circuit (20) for operating the measuring sensor and for providing and outputting flow rate or density measurement values,
a housing (30) for accommodating the electronic measuring/operating circuit.

## Revendications

1. Capteur de mesure (10) d'un appareil de mesure de Coriolis (1) pour mesurer le débit massique ou la densité d'un fluide s'écoulant dans une conduite, comprenant :
au moins un tube de mesure (11) pour guider le fluide, avec une entrée (11.1) et une sortie (11.2)
au moins un excitateur (12) pour exciter les vibrations du tube de mesure ;
au moins deux capteurs (13) pour détecter les vibrations du tube de mesure ;
un support (14) pour maintenir le tube de mesure ;
**caractérisé en ce que** le capteur de mesure comporte un capteur de température RFID (15) qui est conçu pour déterminer la température du tube de mesure,
le capteur de mesure comportant un émetteur-récepteur RF (16) qui est conçu pour lire le capteur de température,
le ou les tubes de mesure (11) ainsi que le capteur de température étant remplaçables,
le capteur de mesure (10) comportant un dispositif d'accouplement (18) pour l'accouplement et le désaccouplement d'au moins un tube de mesure,
le capteur de température (15) pouvant être stérilisé par rayonnement gamma sans que cela n'affecte son fonctionnement,
le capteur de température et le tube de mesure étant conçus pour être stérilisés ensemble par rayonnement gamma.

2. Capteur de mesure selon la revendication 1,
le capteur de température étant monté sur le tube de mesure.

3. Capteur de mesure selon la revendication 1,
dans lequel le au moins un tube de mesure présente sur un côté d'entrée du tube de mesure ainsi que sur un côté de sortie du tube de mesure respectivement au moins une plaque de fixation (17), dans lequel la au moins une plaque de fixation d'un côté respectif est conçue pour fixer le tube de mesure et définir un noeud d'oscillation,
dans lequel le capteur de température est monté sur le tube de mesure ou sur une plaque de fixation.

4. Capteur de mesure selon l'une des revendications précédentes,
le transceiver (16) étant conçu pour lire le capteur de température en continu ou à des intervalles de temps inférieurs à 10 secondes.

5. Capteur de mesure selon l'une des revendications précédentes,
le capteur de température (15) étant conçu pour transmettre d'autres informations telles que des données sur l'appareil telles que le diamètre nominal, le facteur d'étalonnage, le point zéro, le numéro de l'appareil, les coefficients de densité.

6. Capteur de mesure selon l'une des revendications précédentes,
le transceiver (16) et le capteur de température (15) étant au moins partiellement entourés d'un blindage (19), lequel blindage est conçu pour réduire la charge de l'excitateur et des capteurs par le rayonnement électromagnétique émis par le transceiver.

7. Capteur de mesure selon l'une des revendications précédentes,
l'émetteur-récepteur étant découplé thermiquement du tube de mesure.

8. Appareil de mesure de Coriolis (1) comprenant
un capteur de mesure (10) selon l'une des revendications précédentes,
un circuit électronique de mesure/de fonctionnement (20) pour faire fonctionner le capteur de mesure et pour fournir et délivrer des valeurs de mesure de débit ou de densité,
un boîtier (30) pour loger le circuit électronique de mesure/de fonctionnement.
